# EUROPÄISCHE PATENTSCHRIFT

(11) **EP 1 447 623 B1**
(45) Veröffentlichungstag und Bekanntmachung des Hinweises auf die Patenterteilung: **08.08.2007**
(21) Anmeldenummer: 04001132.2
(22) Anmeldetag: 21.01.2004
(51) Int. Cl.: F23G 7/06, F28D 17/02

(54) **Verfahren zur Herstellung von Wärmespeicherkörpern**
Method of producing heat storage elements
Méthode de fabrication d'éléments de stockage

(30) Priorität: 14.02.2003 DE 20302420 U
(43) Veröffentlichungstag der Anmeldung: 18.08.2004
(73) Patentinhaber: Porzellanfabrik Hermsdorf GmbH, 07629 Hermsdorf (DE)
(72) Erfinder: Rauche, Ekkehard, 07629 Hermsdorf (DE); Kaiser, Sybille, 07639 Bad Klosterlausnitz (DE)
(74) Vertreter: Pfeiffer, Rolf-Gerd

(56) Entgegenhaltungen:
- DE-C- 711 997
- DE-U1- 8 705 996
- GB-A- 267 877
- GB-A- 2 026 673

## Beschreibung

Die Erfindung bezieht sich auf ein Verfahren zur Herstellung prismenförmiger Wärmespeicherkörper aus Keramik.

Solche Wärmespeicherkörper sind bekannt (EP0472605B2, DE 8705996 U, DE 7119). Sie werden für die Wärmespeichermassen von regenerativen Nachverbrennungsanlagen insbesondere zur Reinigung der Abluft von organischen Dämpfen verwendet. Die Nachverbrennung kann thermisch erfolgen, wobei die Dämpfe bei einer Temperatur von über 750°C verbrannt werden, oder bei niedrigerer Temperatur katalytisch.

Dabei sind wenigstens zwei Regeneratoren mit einer solchen Wärmespeichermasse vorgesehen, denen der Abgasstrom wechselweise zugeführt wird. Die Dämpfe in der Abluft werden in dem ersten, zuvor aufgeheizten Regenerator verbrannt, die gereinigte heiße Abluft tritt durch den zweiten Regenerator aus, wobei ihr Wärme entzogen wird, um den zweiten Regenerator aufzuheizen, mit dem dann die Dämpfe verbrannt werden.

Bei der Herstellung der Wärmespeicherkörper aus Keramik werden aus einem grünen Strang, der sich vorwärts bewegt, mit einem Schneiddraht Stücke abgeschnitten, um zu den Seitenflächen senkrecht verlaufende Stirnflächen zu erhalten. Anschließend werden die Wärmespeicherkörper gebrannt.

Durch Fertigungstoleranzen, thermische Ausdehnung und dergleichen gelingt es nicht, die Kanäle der Wärmespeicherkörper zweier Lagen der Wärmespeichermassen exakt fluchtend anzuordnen. Wenn die Wärmespeicherkörper zweier Lagen direkt aufeinander stehen würden, können dann die Stege des einen Wärmespeicherkörpers die Kanäle des anderen zumindest teilweise verschließen, was einen hohen Druckverlust zur Folge hätte. Aus diesem Grunde werden zylindrische Keramikelemente verwendet, um die Wärmespeicherkörper auf Abstand zu halten. Damit werden jedoch die Kanäle im Bereich dieser Abstandshalter verschlossen.

Aufgabe der Erfindung ist es, ein Herstellungsverfahren bereitzustellen, wodurch ein Abstandshalter geschaffen wird der die Strömung durch die Kanäle des Wasserspeicherkörpers nicht beeinträchtigt.

Dies wird erfindungsgemäß mit dem in Anspruch 1 gekennzeichneten Verfahren erreicht. In den Unteransprüchen sind vorteilhafte Ausgestaltungen des Verfahrens wiedergegeben.

Der Wärmespeicherkörper weist zumindest an einer Prismenendfläche integrierte Abstandshalter auf, die vorzugsweise an den Ecken der Prismenendflächen vorgesehen sind. Die Abstandshalter bilden vorspringende Abschnitte des Wärmespeicherkörpers an der Prismenendfläche.

Die integrierten Abstandshalter oder Abstandshalterabschnitte werden dabei durch eine Materialabtragung an der Prismenendfläche gebildet. Dazu wird eine Frässcheibe verwendet, die mit ihrer senkrecht zur Drehachse verlaufenden Fläche in die Prismenendfläche des Wärmespeicherkörpers versenkt wird, und zwar des ungebrannten Wärmespeicherkörpers. Durch das weiche Material ist der Verschleiss entsprechend gering.

Durch die rotationssymmetrische Ausbildung des Wärmespeicherkörpers auch im Bereich der Prismenendfläche mit den Abstandshalterabschnitten werden thermische Spannungen weitgehend reduziert. Auch ist bei den Wärmespeicherkörpern zwischen den Lagen eine Querströmung in allen Richtungen als Ausgleichsströmung sichergestellt.

Der prismenförmige Wärmespeicherkörper weist einen rechteckigen, insbesondere quadratischen Querschnitt auf. Der Durchmesser der Frässcheibe wird dann so gewählt, dass er kleiner ist als die Diagonale zwischen zwei Ecken der Prismenendfläche, aber größer als der Abstand zweier gegenüberliegenden Seitenflächen des Quadrats bzw. größer als der Abstand der zwei Seiten des Rechtecks, die den größeren Abstand haben.

Die Wärmespeicherkörper können eine Länge von z.B. 100 - 600 mm besitzen und eine Breite von 100 - 200 mm.

Die Höhe der Abstandshalter kann bis zu 30 mm betragen.

Die Kanäle der Wärmespeicherkörper weisen vorzugsweise einen hydraulischen Durchmesser von 1 bis 12 mm, insbesondere 2 - 8 mm auf. Unter hydraulischem Durchmesser ist der Quotient aus der vierfachen Querschnittsfläche des Kanals durch dessen Umfang zu verstehen. Die gasdurchströmbare Querschnittsfläche liegt vorzugsweise zwischen 3 und 25 mm², während die Stege zwischen den Kanälen eine Breite von vorzugsweise 0,5 mm bis 1 mm aufweisen. Damit weist der Wärmespeicherkörper eine spezifische Oberfläche von vorzugsweise mehr als 600 m²/m³ auf.

Das keramische Material für den Wärmespeicherkörper kann irgendein Material sein, das bei der hohen Temperatur von 750°C und mehr und den kurzen Umschaltzeiten von fünf Minuten und weniger, die in regenerativen thermischen Nachverbrennungsanlagen auftreten, hinreichend stabil ist. Die durch Extrusion gebildeten Wärmespeicherkörper können beispielsweise aus Steingut, Porzellan, Cordierit oder Mullit bestehen.

Nachstehend ist eine Ausführungsform des Wärmespeicherkörpers anhand der Zeichnungen beispielhaft näher beschrieben.

Darin zeigen:
Figur 1 eine perspektivische Ansicht eines Wärmespeicherkörpers;
Figur 2 eine perspektivische Ansicht gemäß Figur 1, jedoch ohne Darstellung der Kanäle, um die Abstandshalterabschnitte besser sichtbar zu machen; und
Figur 3 die Seitenansicht einer Frässcheibe, die in eine Prismenendfläche des Wabenkörpers zur Bildung der Abstandshalter taucht.

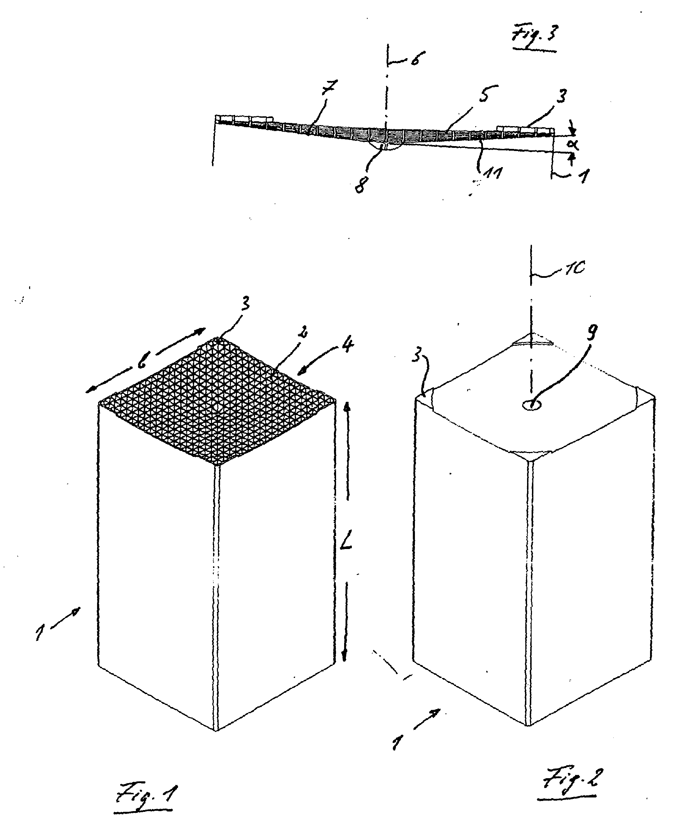

Gemäß Figuren 1 und 2 weist der Keramikspeicherkörper 1 einen quadratischen Querschnitt mit einer Breite oder Seitenlänge 1 von z.B. 150 mm und einer Länge L von z.B. 300 mm auf. Die im Querschnitt quadratischen Kanäle 2 weisen einen hydraulischen Durchmesser von z.B. 4 mm auf. Die Breite der Stege zwischen den Kanälen 2 kann z.B. 1 mm betragen. Die Kanäle 2 verlaufen parallel zur Prismenhauptachse 10. Auch sind sie gradlinig.

Die Abstandshalterabschnitte 3 an den vier Ecken der oberen Prismenendfläche 4 des Wärmespeicherkörpers 1 weisen eine Höhe von z.B. 10 mm auf.

Die Abstandshalter 3 werden durch Fräsen mit einer Frässcheibe 5 mit Drehachse 6 gebildet, die mit ihrer Seitenfläche 7 in die Prismenendfläche 4 soweit versenkt wird, dass die Abstandshalter 3 gebildet werden, wie aus Figur 3 ersichtlich. D.h. die Drehachse 6 und die Prismenhauptachse 10 stimmen beim Fräsen überein.

Die Seitenfläche 7 der Frässcheibe 5 kann dabei, bezogen auf die Drehachse 6, leicht konisch ausgebildet sein, wodurch die ausgefräste Fläche 11 konisch mit einem Konuswinkel von z.B. 10° ist.

Die Frässcheibe 5 weist zudem in der Drehachse 6 einen Zentriervorsprung 8 auf, der eine Ausnehmung 9 in der Mitte der Prismenendfläche bildet.

Durch das Ausfräsen der konischen Fläche 11 wird verhindert, dass die Stege zwischen den Kanälen brechen, was bei Verwendung einer Frässcheibe 5 mit planparalleler Seitenfläche vorkommen kann.

## Patentansprüche

1. Verfahren zur Herstellung prismenförmiger Wärmespeicherkörper aus Keramik mit rechteckigem, insbesondere quadratischem Querschnitt für die Wärmespeichermasse von regenerativen Nachverbrennungsanlagen, mit einer Vielzahl von durchgehenden, in beide Prismenendflächen mündenden, zur Prismenhauptachse im Wesentlichen parallel und im Wesentlichen gradlinig verlaufenden Kanälen, wobei die Wärmespeichermasse durch mindestens zwei im Abstand voneinander angeordnete Lagen aus jeweils einer Vielzahl von Wärmespeicherkörpern gebildet ist, wobei der Wärmespeicherkörper (1) zumindest an einer Prismenendfläche (4) mit integrierten Abstandshaltern (3) versehen ist die durch eine Materialausnehmung an der Prismenendfläche (4) gebildet sind, wobei die Materialausnehmung in Form einer Konischen Vertiefung ausgeführt ist, **dadurch gekennzeichnet, dass** die konische Vertiefung (11) vermittels einer Frässcheibe (5) eingebracht wird, und **dass** Frässcheibe (5) so gewählt wird, dass der Durchmesser der Frässcheibe (5) kleiner ist als die Diagonale zwischen zwei Ecken der Prismenendfläche (4) des Wärmespeicherkörpers (1), aber größer als der Abstand zweier gegenüberliegenden Seitenflächen des Quadrats bzw. größer als der Abstand der zwei Seiten des Rechtecks, die den größeren Abstand aufweisen.

2. Verfahren nach Anspruch 1 **dadurch gekennzeichnet, dass** die ausgefräste Fläche (11) zwischen den Abstandhalterabschnitten (3) durch eine zur Prismenhauptachse (10) rotationssymmetrische Vertiefung gebildet wird.

3. Verfahren nach einem der vorstehenden Ansprüche, **dadurch gekennzeichnet, dass** ein Konuswinkel (α) von höchstens 30° gewählt wird.

4. Verfahren nach einem der vorstehenden Ansprüche, **dadurch gekennzeichnet, dass** der durch die Materialausnehmung gebildeten Vertiefung in der Mitte eine zusätzliche Ausnehmung (9) gegeben wird.

## Claims

1. Method for producing prismatic heat storage bodies made of ceramics having a rectangular, in particular square cross-section adapted for the heat storage mass of regenerative thermal oxidation plants, with a plurality of passing through channels which end in the end faces of both prisms, said channels being substantially in parallel to and run substantially in straight-lines to the major axes of the prisms, whereby the heat storage mass is setup by at least two layers spaced apart from one another, each being constituted of a plurality of heat storage bodies, whereby the storage body (1) is provided with integrated spacers (3) at least on one of the prism end-faces (4), said spacers (3) being formed by recessing material from the prism end-faces (4), whereby the material recess takes the shape of a conical depression,
**characterized in that** the conical depression (11) is produced by a milling-disk (5), and **in that** the milling-disk (5) is so selected that the diameter of the milling-disk (5) is smaller than the diagonal between two corners of the prism end-face (4) of the heat storage body (1), however, greater than the distance between two opposing lateral faces of the square, respectively, greater than the distance of those two sides of the rectangle, which have the greater distance from one another.

2. Method as claimed in claim 1, **characterized in that** the milled-out range (11) between the spacers sections (3) is formed by a depression in rotation symmetry relative to the major axis (10) of the prism.

3. Method as claimed in one of the preceding claims, **characterized in that** a cone angle (α) is selected of 30° at most.

4. Method as claimed in one of the preceding claims, **characterized in that** an additional recess (9) is provided in the middle of the depression which is formed by material recessing.

## Revendications

1. Le procédé destiné à la fabrication de corps prismatiques en céramique, accumulateurs de chaleur, de section rectangulaire, de préférence carrée, servant de masse accumulatrice de chaleur dans des installations de postcombustion, comprenant une multitude de gaines débouchant sur les surfaces des deux extrémités terminales des prismes s'étendant, en ligne droite, dans l'essentiel parallèlement à l'axe principal des prismes, la masse accumulatrice de chaleur étant formée d'au moins deux couches disposées dans une certaine distance l'une par rapport et composées d'une multitude de corps accumulateurs de chaleur, les corps accumulateurs de chaleurs (1) étant dotés au moins sur une des surfaces terminales du prisme (4), d'écarteurs intégrés (3) formés par une entaille sur les surfaces terminales du prisme (4), l'entaille ayant la forme d'une cavité conique,
est **caractérisé en ce que** l'entaille conique (11) est formée à l'aide d'un disque de fraisage (5) dont le diamètre doit être inférieur à la diagonale reliant deux coins de la surface terminale du prisme (4) du corps accumulateur de chaleur (1) et supérieur à l'écart entre deux surfaces latérales opposées du carré ou supérieur à l'écart entre deux surfaces latérales du rectangle si celui-ci est le plus grand.

2. Le procédé selon la revendication 1 est **caractérisé en ce que** la surface fraisée (11) située entre les sections des écarteurs (3) est constituée par une entaille rotationellement symétrique par rapport à l'axe principal du prisme (10).

3. Le procédé selon l'une des revendications précédentes est **caractérisé en ce qu'**il faut choisir un angle de conicité (α) de 30° au plus.

4. Le procédé selon une des revendications précédentes est **caractérisé en ce que** la cavité formée par l'évidement dans le matériau est dotée au milieu par un évidement supplémentaire (9).
